# EUROPEAN PATENT APPLICATION

(11) **EP 2 172 768 A1**
(43) Date of publication of application: **07.04.2010**
(21) Application number: 08017511.0
(22) Date of filing: 06.10.2008
(51) Int. Cl.: G01N 21/77, G01N 25/20, G01N 27/02, G01N 27/04

(54) **A sensor for detecting an analyte**

(71) Applicant: Sony Corporation, Tokyo 108-0075 (JP)
(72) Inventor: Hospach, Ingeborg, 70327 Stuttgart (DE); Hulko, Michael, 70327 Stuttgart (DE); Joseph, Yvonne, 70327 Stuttgart (DE); Krasteva, Nadeja, 70327 Stuttgart (DE); Nelles, Gabriele, 70327 Stuttgart (DE); Raible, Isabelle, 70327 Stuttgart (DE); Ulmer, Jens, 70327 Stuttgart (DE)
(74) Representative: Engelhard, Markus

(57) **Abstract**

The present invention relates to a sensor for detecting an analyte, to a sensor array, and to a method of detecting an analyte using the sensor of the invention.
The sensor combines biological and chemical receptor materials.
The sensor is improved in terms of at least one of specificity, sensitivity and limit of detection. The sensor allows discrimination of samples with more than one analyte present.

## Description

The present invention relates to a sensor for detecting an analyte, to a sensor array, and to a method of detecting an analyte using the sensor of the invention.

There are various fields of applications for sensors, such as environmental studies, quality control of chemically or biologically produced compounds and food, process analysis, metabolism, medical diagnosis, and environmental analysis. There is a large demand for continuous monitoring which can, for example, be achieved by artificial sensors. More particularly, gas analysis is used or envisioned in different fields:
- In medical applications to examine physical conditions or disorders. Sources of indicative volatile compounds can be breath, blood, urine, plasma, cerebrospinal fluids, saliva, or pus. For instance, breath analysis or headspace analysis of physiological samples can be used to detect halitosis, cancer or bacterial infections. Presence or absence of specific marker compounds can point to certain physiological conditions, chemical exposures or disorders like halitosis, diabetes, cancer or bacterial infections.
- In food industry for analysis of food freshness or process analysis.
- In security-related applications to detect explosives, toxins or other harmful chemicals
- For environmental monitoring
- In entertainment applications to measure and imitate olfactory impressions.

The instruments used for gas analysis are for example:
- Gas-chromatography combined with mass spectrometry. Complex mixtures of volatile compounds can be analyzed. Different substances are separated by chromatography and subsequently identified by mass spectrometry. These instruments are usually very expensive and require a high degree of expertise to operate them.
- Gas-chromatography combined with gas sensors
- Various electronic nose (eNose) devices that comprise chemical sensors or sensor-arrays. There are several laboratory-based devices and prototypes.
- Colour tubes or colour reagents
- Infrared absorbance or transmittance

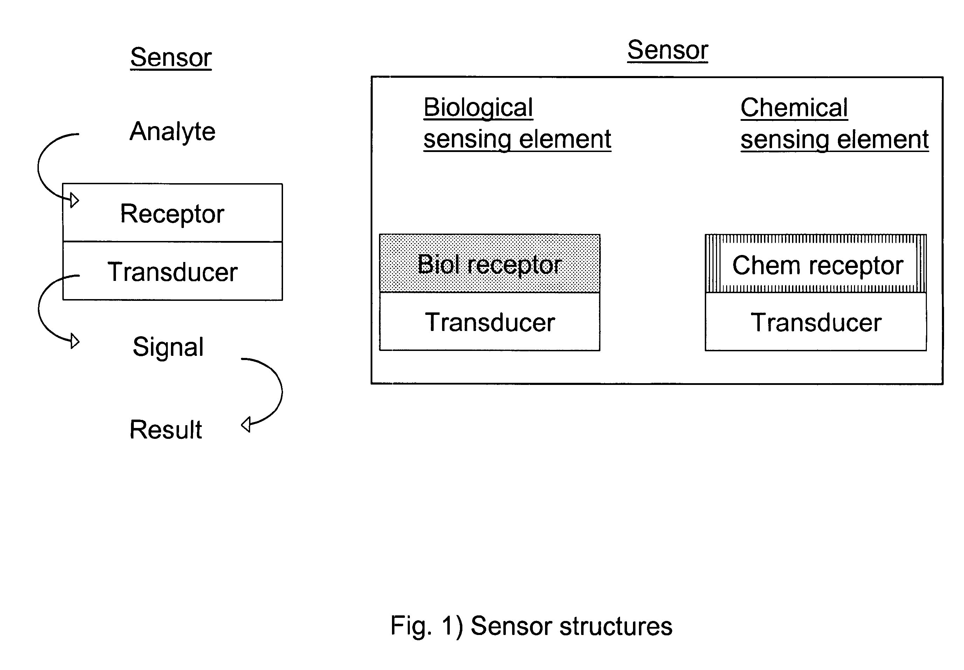

Sensors generally comprise a receptor material and a transducer (Fig. 1). Sensors comprise a material that interacts chemically or physically with the sample or the analyte and is referred to as "receptor material". This receptor material can be made of non-biological compounds and referred to as "chemical receptor material". Low limits of detection are typically achieved by strong and direct chemical or physical interaction between the analyte and the receptor material. Examples of such materials are:
- Organic or inorganic dyes
- Organic or inorganic fluorophores
- Metals
- Semiconductors
- Metal oxides
- Conducting or non-conducting polymers
- Metal or semiconductive nanoparticles or nanoparticle assemblies
- Conductive or semiconductive surfaces modified with organic or inorganic molecules
- Conductive or semiconductive nanofibers, like carbon nanotubes

The interaction between the receptor material and the analyte is measured as a change in various materials properties. This change is converted to a signal and this conversion is referred to as "transduction" and can be realized by changes of various properties as known from the classical transducer principles:
- Conductivity / Resistivity
- Current
- Potential
- Capacity
- Color or light absorption
- Luminescence, fluorescence
- Viscosity
- Mass (gravimetric, mass sensitive resonance techniques)
- Heat (calorimetric)

The receptor material can be made of biological compounds and referred to as "biological receptor material".

Examples of biological materials are:
- Polypeptides or proteins, like enzyme, receptor, designed protein or antibody
- RNA (single- or double-stranded) like aptamer, ribozyme or aptazyme,
- DNA (single- or double-stranded),
- Tissues,
- Cells,
- Organisms,

For advanced sensing applications, in particular gas sensing applications, the sensor devices have to operate reliably in complex environments and have to fulfill strict criteria with respect to specificity, sensitivity and their limit of detection. In most cases the requirements are not achieved, the instruments require expensive hardware, the operation is restricted to experts, the analysis is time consuming or requires extensive sample preparation.

For advanced sensing applications, high performance sensors with high specificity, sensitivity and low limits of detection are needed. Sensors with chemical receptor materials can detect traces of pure chemicals under defined conditions; however they usually do not achieve the required specificity in complex environments. Sensors with biological receptors interact specifically with the analytes in complex environments; however, they do not achieve the required limit of detection.

Accordingly, it is an object of the present invention to provide for a sensor which is improved in terms of at least one of specificity, sensitivity and limit of detection. It was also an object of the present invention to provide for an alternative sensor for detecting an analyte that allows discrimination of samples with more than one analyte present. The presented sensor is alternative to exististing sensors as the sensor combines biological and chemical receptor materials.

All these objects are solved by a sensor for detecting an analyte comprising:
a first sensing element comprising a chemical receptor material,
and a second sensing element comprising a biological receptor material,
wherein an interaction of said analyte with said chemical or biological receptor material leads to a change in an intrinsic property of or associated with said chemical and biological receptor material, respectively,
said sensor further comprising at least one transducer converting said change in said intrinsic property into a signal.

In one embodiment said chemical receptor material is selected from the group comprising organic dyes, inorganic dyes, organic fluorophores, inorganic fluorophores, metal oxides, electrically conducting polymers, electrically non-conducting polymers, light-emitting polymers, metals, semiconductors, metal nanoparticles, semiconducting nanoparticles, electrically conducting or semiconducting materials modified with organic or inorganic molecules, electrically conducting nanofibres, semiconducting nanofibers, carbon nanotubes, quantum-dots, and any combination of the foregoing materials.

In one embodiment said chemical receptor material is not a polypeptide, protein, nucleic acid, DNA, RNA, a tissue(s), a cell(s), or an organism(s).

In one embodiment said biological receptor material is selected from the group comprising polypeptides, proteins, in particular enzymes, receptor proteins, antibodies, membrane proteins in natural or synthetic lipid bilayers, nucleic acids, in particular DNA and RNA, such as aptamers, ribozymes, aptazymes, tissue(s), cell(s), organism(s), and any combination of the foregoing materials.

In one embodiment said intrinsic property of or associated with said chemical or biological receptor material is selected from the group comprising physical properties such as electrical conductivity, resistivity, current, potential, capacity, redox state, color, light absorbance, light transmittance, reflectivity, refractive index, fluorescence, phosphorescence, luminescence, viscosity, mass as determined by gravimetry or by mass sensitive resonance techniques like surface accustic wave resonance or quartz crystal microbalance, heat as determined by calorimetry, conformation, physiological activity, and chemical properties, such as molecular composition, binding states, or reactivity.

In one embodiment said chemical receptor material is present in said first sensing element, and said biological receptor material is present in said second sensing element, respectively, in the form of a layer, spots or a plurality of spots.

In one embodiment there is one transducer per sensing element such that there is a first and second transducer associated with said first and second sensing element, respectively.

In one embodiment an interaction of said analyte with said chemical receptor material leads to a change in an intrinsic property of or associated with said chemical receptor material, and wherein said first transducer converts said change in said intrinsic property of or associated with said chemical receptor material into a first signal, and wherein an interaction of said analyte with said biological receptor material leads to a change in an intrinsic property of or associated with said biological receptor material, and wherein said second transducer converts said change in said intrinsic property of or associated with said second biological receptor material into a second signal.

In one embodiment said first signal and/or said second signal is indicative of the presence and/or the amount of an analyte.

In one embodiment said first signal and said second signal are individually further processed or are combined and further processed, wherein further processing includes mathematical operations, such as averaging, adding or subtracting, performing a pattern recognition algorithm, use of said first signal as a qualitative measure for said analyte and use of said second signal as a quantitative measure for said analyte, and vice versa, use of said first or said second signal or the combined signal thereof for adjusting and calibrating data recording of further sensing elements, use of said first signal or said second signal or the combination thereof for baseline drift compensation, and use of said first signal and said second signal to cover different concentration ranges thereby covering a broader concentration range.

In one embodiment said intrinsic properties of or associated with said chemical and biological receptor material, respectively, are the same or different.

In one embodiment an interaction of said analyte with said chemical and said biological receptor material leads to a change in an intrinsic property of or associated with said chemical and biological receptor material, respectively, and wherein said intrinsic property of or associated with said chemical and biological receptor material, respectively, is the same, and wherein there is a first and a second transducer associated with said chemical and said biological receptor material respectively, both of which convert said change in said intrinsic property into a combined signal.

In another embodiment an interaction of said analyte with said chemical and biological receptor material leads to a change in an intrinsic property of or associated with said chemical and biological receptor material, respectively, and wherein said intrinsic property of or associated with said chemical and biological receptor material, respectively, is the same, and wherein there is only one common transducer for both said chemical and biological receptor material, wherein said common transducer converts said change in said intrinsic property into a common signal.

In one embodiment said chemical receptor material and said biological receptor material are arranged in a layer each, either next to each other or on top of each other, and at least one of said layers is in contact with said transducer, wherein, if said layers are on top of each other, the upper layer covers the lower layer completely or at least partially.

In another embodiment there is a first transducer and a second transducer associated with said chemical receptor material and said biological receptor material, respectively, and wherein an interaction of said analyte with said chemical receptor material leads to a change in an intrinsic property of or associated with said chemical receptor material, and wherein said transducer associated with said chemical receptor material converts said change in said intrinsic property of said chemical receptor material into a signal which interacts with the biological receptor material which interaction, in turn, leads to a change in an intrinsic property of or associated with said biological receptor material, and wherein said transducer associated with said biological receptor material converts said change in said intrinsic property of said biological receptor material into a signal, and vice versa.

In one embodiment said analyte is a gaseous analyte, a liquid analyte or a solid analyte.

In one embodiment said analyte is comprised in a sample, and wherein said first sensing element and said second sensing element are arranged such that said sample, upon exposure of the sensor to said sample, is first passing said first sensing element and subsequently said second sensing element, or vice versa, or said sample passes said first sensing element and said second sensing element simultaneously.

In one embodiment said analyte is comprised in a sample, and wherein said first and second sensing elements are arranged in such a manner that, upon exposure of said sensor to said sample, a first portion of said sample passes by said first sensing element and a second portion of said sample passes by said second sensing element.

In one embodiment, the sensor according to the present invention, comprises a third sensing element and, optionally, further sensing elements, wherein said third and said further sensing elements are, independently at each occurrence, as defined above.

In one embodiment, the sensor according to the present invention, comprises a plurality of sensing elements which are, independently at each occurrence, as defined above.

In one embodiment the sensor according to the present invention, comprises at least a first, second and third sensing element, said sensing elements being associated with a first, second and third transducer, respectively.

In one embodiment said first, second and third sensing elements are serially arranged such that at least two sensing elements are behind one another so that a sample comprising an analyte, upon exposure of said sensor to said sample, first passes one and then the other of said at least two sensing elements.

In one embodiment said first, second and third sensing elements are serially arranged such that said first, second and third sensing element are behind one another so that a sample comprising an analyte, upon exposure of said sensor to said sample, passes said first, second and third sensing elements one after the other.

In one embodiment said first and third sensing elements are of the same type and said second sensing element is of a different type, and wherein said first, second and third sensing elements are serially arranged such that said first, second and third sensing element are behind one another so that a sample comprising an analyte, upon exposure of said sensor to said sample, passes said first, second and third sensing elements in the order first, second and third sensing element, or third, second and first sensing element.

In one embodiment two out of said first, second and third sensing elements comprise a chemical receptor material and the other sensing element comprises a biological receptor material, or wherein two out of said first, second and third sensing elements comprise a biological receptor material, and the other sensing element comprises a chemical receptor material.

The objects of the present invention are also solved by a sensor array comprising a plurality of sensors as defined before.

The objects of the present invention are also solved by a method of detecting an analyte, comprising:
- exposing a sensor or a sensor array according to the present invention to a sample comprising an analyte, and
- detecting a signal, wherein the signal is indicative of the presence and/or amount of said analyte within said sample.

In one embodiment the method according to the present invention comprises:
- exposing a sensor having at least three sensing elements, as defined above, to a sample comprising an analyte,
- detecting in any order a signal from said first and said third transducer, and
- comparing said two signals, wherein a difference between the two signals is indicative of the presence and/or amount of said analyte within said sample.

In one embodiment said sample is a body sample, such as blood, urine, plasma, cerebrospinal fluid, pus, saliva, breath, feces, or solid body exhaust, a food sample, an environmental sample, such as air, water or soil from the environment.

The objects of the present invention are also solved by a the use of a method according to the present invention for medical diagnosis, healthcare diagnosis, food analysis, agricultural testing, detection of harmful chemicals, toxins or explosives, or for environmental detection of pollutants.

Unless specifically indicated otherwise, the term "first" and "second", when used in connection with "sensing element" do not limit the present invention to a specific temporal, spatial or hierarchical order, although in some embodiments, a "first sensing element" may be spatially or temporally arranged before a "second sensing element".

The term "chemical receptor material" is meant to include any compound of non-biological origin or synthesized by man, which is capable of interacting with an analyte, where the interaction of the analyte with this material results in a change of an intrinsic property of the material. More specifically, as used herein, the term "chemical receptor material" is meant to comprise organic dyes, inorganic dyes, organic fluorophores, inorganic fluorophores, metaloxides, electrically conducting and non-conducting polymers, light-emitting polymers, metals, semiconductors, metal nanoparticles, semiconductor nanoparticles, electrically conducting or semiconducting materials modified with organic or inorganic molecules, electrically conducting nanofibres, semiconducting nanofibers, carbon nanotubes, quantum-dots. The "chemical receptor material" can also be of any combination of mentioned materials. Additionally, such "chemical receptor material" is meant to exclude biological polymers, such as polypeptides, oligopeptides, proteins, nucleic acids, such as polynucleotides or oligonucleotides, enzymes, biological receptors, proteins, antibodies, aptamers, ribozymes, aptazymes, RNA, and DNA. The term is also meant to exclude whole tissues or combinations thereof, cells and organisms.

The term "biological receptor material", as used herein, is meant to refer to compounds/materials that have been isolated from a natural origin or have been artificially synthesized or modified but are based on biologically occurring polymers. More specifically, "biological receptor materials" include biopolymers, such as polypeptides, oligopeptides, proteins, such as enzymes, receptor proteins, membrane proteins in natural or synthetic lipid bilayers, recombinantly designed and produced proteins, antibodies, nucleic acids, oligonucleotides, polynucleotides, RNA, such as aptameres, ribozymes or aptazymes, and DNA. The nucleic acid may be single stranded or double stranded. Moreover, the term is meant to include tissues , cells, and organisms. The "biological receptor material" can also be of any combination of the aforementioned materials.

The term "transducer" is meant to refer to any means which convert a change of an intrinsic property of a receptor material into a measureable and gaugeable signal. A "signal", as used herein, is meant to refer to a measurable response. In most cases the signal is an electrical signal which can be subsequently processed by an electronic device. The simplest example of a transducer is an electrode on which receptor material has been immobilized. Other examples are a spectrophotometer or a photodiode converting light into current, mass-sensitive pie-zocrystals converting mechanical oscillation into current, or calorimeter converting heat into current. The term "intrinsic property" of a receptor material, as used herein, is meant to refer to any property that is inherent in such receptor material. Preferably, such "intrinsic property" is a physical property as defined above, or a chemical property as defined above.

It should be noted that, in some embodiments, there may be a third and further sensing elements, optionally associated with one or several transducers. These third and further sensing elements are individually and independently at each occurrence, as defined for the first and second sensing elements above.

As used herein, the term "plurality of sensing elements" is meant to refer to three or more sensing elements. Two sensing elements are "of the same type", as used herein, if they comprise the same receptor material, preferably the same biological receptor material or the same chemical receptor material, as defined above. The idea of having two sensing elements of the same type is of particular relevance with those embodiments where three or more sensing elements are serially arranged, and wherein one sensing element within the series of sensing elements changes the composition of a sample to be analyzed. Such an arrangement, wherein a sensing element changes such composition of a sample and is arranged between two or more sensing elements which are identical to each other allows to compare the respective signals of the two identical sensing elements and thereby arrive at conclusions on the presence/absence/amount of analyte within the sample before and after the sample has passed the sensing element which thus changes the composition. In such an arrangement, the sample passes the various sensing elements in a defined order in a flow along/over or across the arrangement of sensing elements. As used herein, the term "in the order first, second and third sensing element" is meant to refer to such sensing elements being arranged with the first sensing element coming before the second which comes before the third sensing element, with reference to an exposure of sample through these sensing elements. In the term "in the order third, second and first sensing element", such order is reversed. Provided that the sensing element which is of the "unique" type, i.e. not identical to another sensing element, is "sandwiched" between two sensing elements of the same type, other possibilities of order are "second sensing element before the first sensing element before the third sensing element" or "second sensing element before third sensing element before the first sensing element", and "first sensing element before the third sensing element before the second sensing element", and "third sensing element before the first sensing element before the second sensing element". Downstream sensing elements experience a change caused by upstream sensing elements, and it is such change that is also measured in accordance with the present invention.

Even though, gas sensing performance could be improved in many cases by using sensor arrays with different receptor materials or different transduction mechanisms in parallel, combinations of biological and chemical receptor materials have, to the best knowledge of the inventors, not been reported. An obstacle to the simultaneous use of chemical receptor materials and biological receptor materials is that it is generally believed that biological receptor materials do not work under harsh, non-physiological conditions and chemical receptor materials do not work under complex physiological conditions. Another obstacle to the simultaneous use of chemical receptor materials and biological receptor materials is that it is generally believed that biomolecules such as enzymes cannot be used if the analyte of interest is not a physiological substrate of this enzyme.

Sensor devices using a combination of chemical and biological receptor materials are described in this invention. The present inventors have surprisingly found that a combination of biological and chemical receptor materials yield drastically improved sensors which operate reliably in complex environments.

The receptor materials when applied in layers can e.g. be prepared by any technique, like:
Layer-by-layer assembly (dipping, flow-cell),
Coating (e.g. spin-, dip-, or spray coating),
Chemical or physical vapor deposition,
Sputtering
Electroless plating
Elctrodeposition
Sintering,
Self-assembly
Printing (e.g. inkjet-printing, screen-printing)
Stamping,
Immersing,

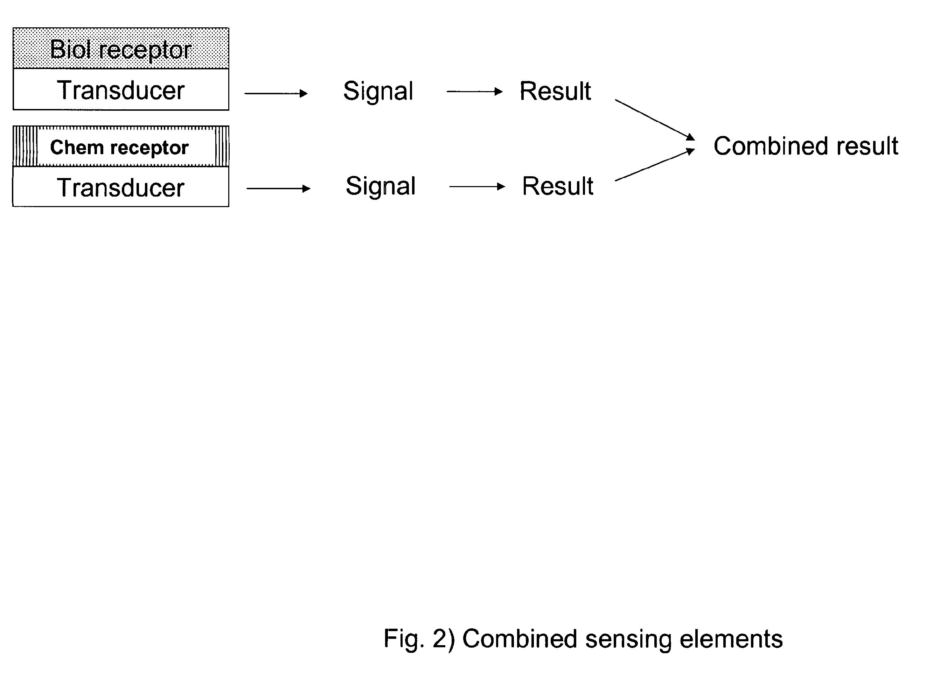

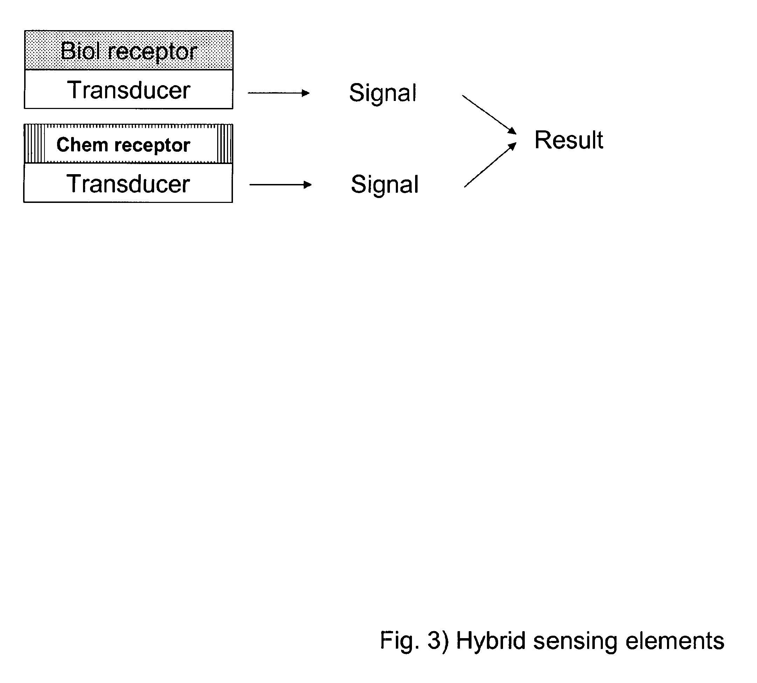

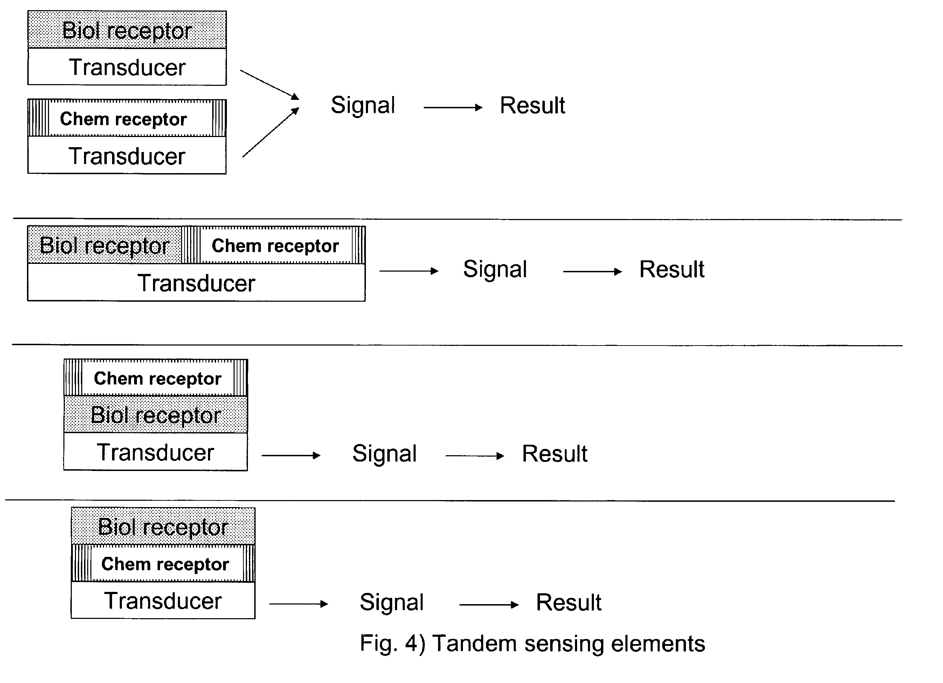

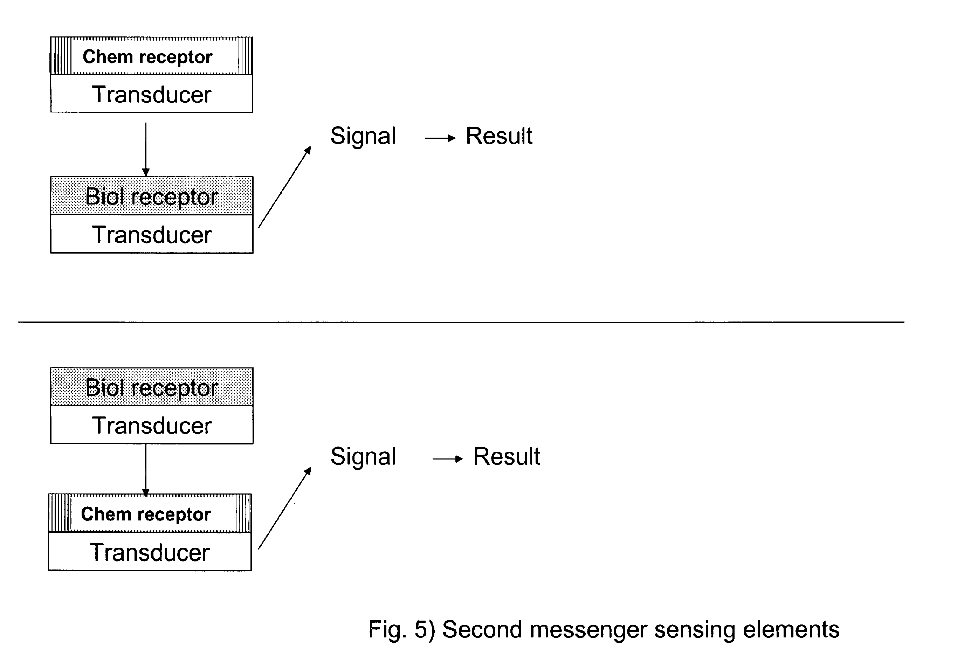

The chemical receptor materials and biological receptor materials can be arranged in various ways in a sensor device according to the present invention. The number of different receptor material units depends on the complexity of the sample mixture:
- They can be used in the context of array such that individual sensing elements yield individual signals that lead to individual results (Fig. 2). The results can be individually displayed or further processed by
   ○ Mathematical operation like averaging, adding, subtracting
   ○ Pattern recognition algorithms
   ○ A set of results is used to signal the presence of an analyte out of a set of compounds and the other set of results is used to quantify the amount of the identified analyte
   ○ A set of results is used to correct the results of another set, like non-linearities, subtract background or side reactions
   ○ A set of results is used to adjust data recording of other sensing elements
   ○ One sensing element compensates nonlinearities of the other sensing element
   ○ Baseline-drift compensation
   ○ Use of different results to cover a broader concentration range.
- They can be used in hybrid structures such that signals are joined before being evaluated, like in ratiometric sensors (Fig. 3).
- They can be used in tandem structures where interaction of biological and chemical receptor material with the analyte join in the same transduction mechanism (Fig. 4). Thereby the two materials can be arranged as:
   ○ Chemical receptor material decorated with biological receptor material
   ○ Biological receptor material decorated with chemical receptor material
   ○ Multistack with separation layers
   ○ Multistack without separation layers
   ○ Random arrangement
- They can be used in "second messenger" structures where the transducer signal of the sensing element with biological receptor material interacts with the chemical receptor material of another sensing element, or the transducer signal of the sensing element with chemical receptor material interacts with the biological receptor material of another sensing element (Fig. 5).

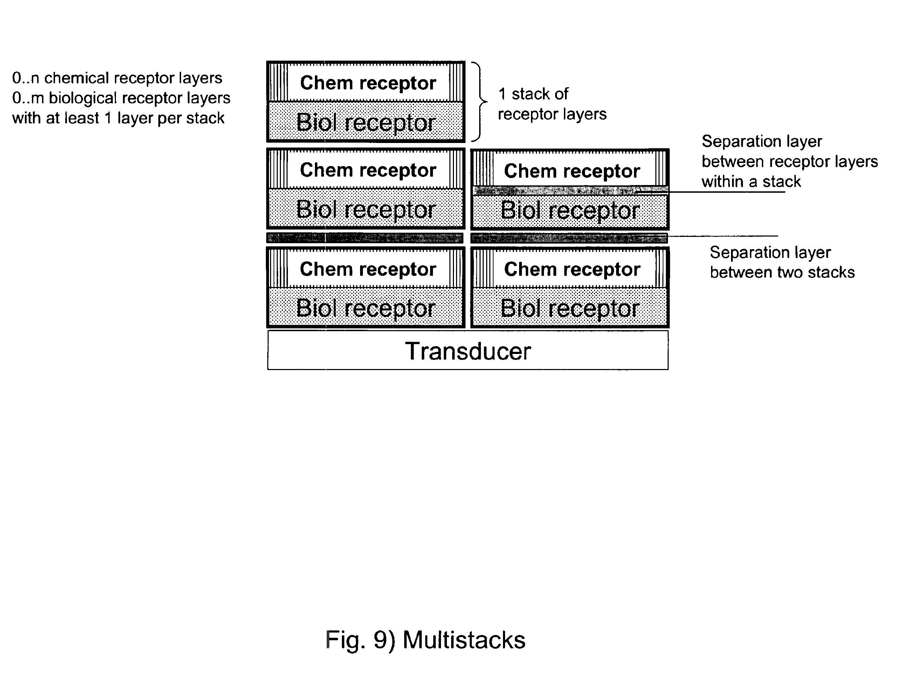

The term "multistack" as used herein, is meant to refer to several stacks of layers of chemical receptor material, biological receptor material or both, wherein said stacks are next to or on top of each other (Fig. 9). Such layers in such stacks may optionally have separation layers between them. The separation layers can be of any material that does not interfere with the sensing process. The purpose of a separation layer is to keep compounds of one layer apart from an adjacent layer when mixing of compounds of adjacent layers is unwanted. A separation layer can be applied between layers within a stack or between different stacks.

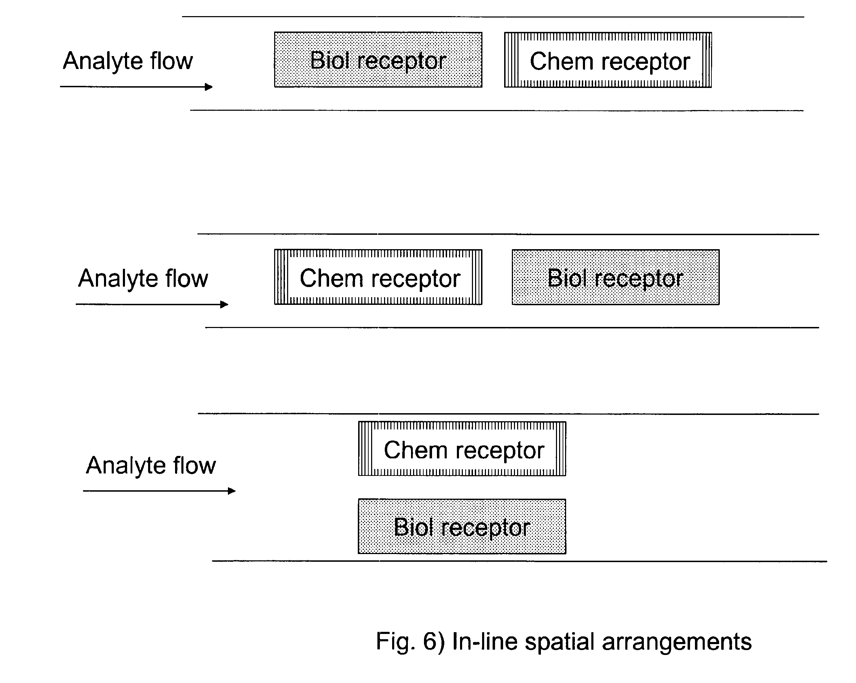

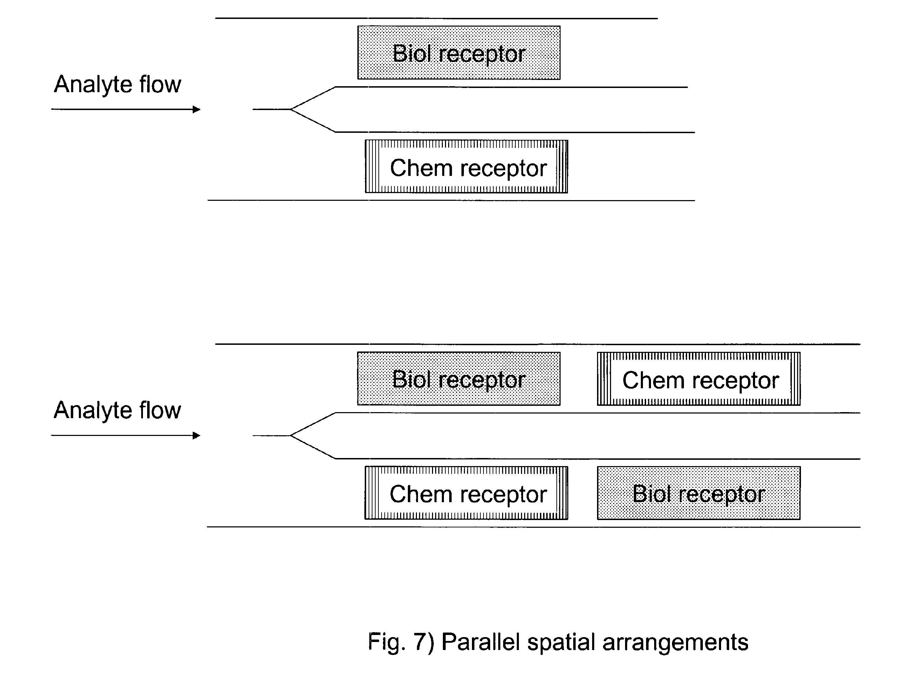

In one embodiment of a device according to the present invention, one portion of analyte can interact with all used biological and chemical receptor materials (Fig. 6). Thereby the receptor materials can be arranged in any order, like
First biological receptor materials interact with the analyte, then the chemical receptor materials
First chemical receptor materials interact with the analyte, then the biological receptor materials
Chemical and biological receptor materials alternate and starting with biological receptor material or starting with chemical receptor material
Chemical and biological receptor materials are arranged in any kind of mixed or random order
Simultaneous interaction
Or different portions of gas analyte can be analyzed by either biological or chemical receptor materials (Fig. 7).
Or different portions of gas analyte can be analyzed by combination of biological and chemical receptor materials; thereby the order in which they are arranged is as described.

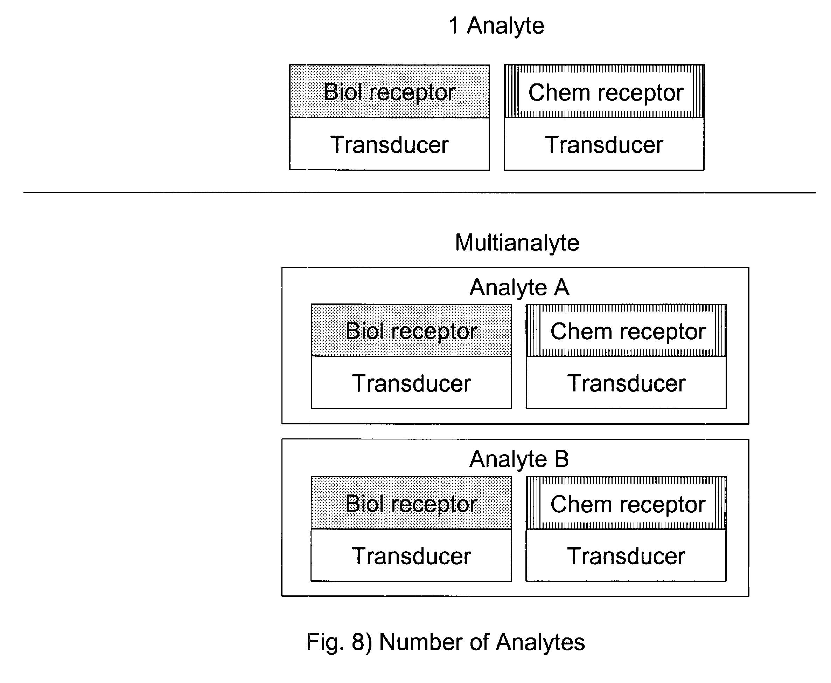

A sensor device in accordance with the present invention can be used to measure one analyte or many different analytes (Fig. 8). Examples of analytes in accordance with the present invention are organic molecules like hydrocarbons, hydrocarbons with functional groups such as amine, imine, nitro, nitroso, niril, thiol, sulfoxyl, alcohol, carbonyl, carboxyl, ester, ether, amide, imide or polymerised organic molecules like polyamides, polyesters, polyacids, polyimines, polyether, or molecules of biological origin like peptides, proteins, sugars, polysaccharides, nucleosides, nucleotides, polynucleotides, or complex analytes like cells, tissue organisms or viruses, or inorganic molecules like hydrogen, oxygen, carbon dioxide, carbon monoxide, halogens, nitrogen oxides, sulfur oxides, hydrogenperoxide.

A sensor device in accordance with the present invention can be used for real-time measurements or for analysis of conserved analyte samples.

Likewise a sensor device in accordance with the present invention can be used for applications like:
Medical applications to examine physical conditions or disorders. Sources of indicative volatile compounds can be breath, blood, urine, plasma, cerebrospinal fluids, saliva, or pus. For instance, breath analysis or headspace analysis of physiological samples to detect halitosis, cancer or bacterial infections. Presence or absence of specific marker compounds can point to certain physiological conditions, chemical exposures or disorders like halitosis, diabetes, cancer or bacterial infections.
Medical applications for monitoring of drug metabolism
In food-related applications to analyze food freshness, presence of allergens or monitor food-related processes.
In security-related applications to detect explosives, toxins or other harmful chemicals Environmental monitoring
In occupational medicine applications to monitor exposition to chemicals
In entertainment applications to measure and imitate olfactory impressions.

Moreover, reference is made to the figures wherein
figure 1 shows the general principle of a sensor as known from the prior art (left side) and the general structure of a "biological sensing element" and "chemical sensing element" within a sensor as presented in the present invention (right side);
figure 2 shows combined sensing elements in a sensor device according to the present invention, wherein a first sensing element produces a first signal and a second sensing element produces a second signal;
figure 3 shows hydrid structures of sensing elements in accordance with the present invention;
figure 4 shows tandem structures of sensing elements according to the present invention;
figure 5 shows so-called "second messenger" sensing elements in accordance with the present invention;
figure 6 shows in-line spatial arrangement of sensing elements in accordance with the present invention;
figure 7 shows parallel spatial arrangements of sensing elements in accordance with the present invention; and
figure 8 shows different approaches of dealing with samples containing one analyte and more than one analyte. This figure is intended to illustrate the interaction of one or more analytes with the sensors. The depicted sensor arrangement is just for illustration. The sensors themselves can be of any of the previously described ones.
figure 9 shows a multistack arrangement with and without potential separation layers between receptor layers within stacks and between stacks of receptor layers.
Figure 10 shows examples of in-line sensing elements arrangements

The present invention provides a unique combination of biological and chemical receptors, which are assembled together in a sensor device. Furthermore, it provides the possibility to improve specificity, sensitivity and the limit of detection simultaneously. The sensor according to the present invention operates reliably in complex sensor environments and detects trace amounts in a specific manner. Moreover, the device according to the present invention allows a real-time analysis and can be operated without special expertise.

Moreover, reference is made to the following example which is given to illustrate, not to limit the present invention:

### Examples

A) A gas mixture of a thiol compound (e.g. methyl mercaptane, CH₃SH) and an alcohol compound (e.g. ethanol, C₂H₅OH), may, e.g. exist in the human exhaled breath of person who suffers from a specific metabolic disorder or disease condition after consumption of alcohol-containing beverage.

A sensing element with a chemical receptor material responds to both compounds (Organically interlinked gold nanoparticles are an example for the receptor materials). The alcohol compound interacts strongly with the material and influences the response to the thiol compound. That means that the effects of thiols and alcohols on the receptor material are not simply additive. Instead, there is a complex interdependence based on chemical interaction mechanism.

Further, in addition to the chemical sensing element, there is a biological sensing element with a specific response behavior to thiol compounds (A redox active protein such as cytochrome c physisorbed onto a transparent tin oxide electrode is an example for such receptor material) An influence on the signal of this biological sensing element by alcohols is excluded based on the reaction mechanism.

Consider following three cases of dosing experiments and sensor responses:

| | Concentrations in mixtures Measured in arbitrary concentration units | | Sensing element responses measured in arbitrary response units | |
|---|---|---|---|---|
| | Thiol | Alcohol | Chemical sensing element | Biological sensing element |
| Case 1 | 10 | 0 | 100 | 100 |
| Case 2 | 0 | 25 | 100 | 0 |
| Case 3 | 5 | 25 | 100 | 50 |

In case one the chemical sensing element and the biological sensing element respond with 10 response units per 1 concentration unit of thiol. In case 2 the chemical sensing element responds with 4 response units per 1 concentration unit of alcohol and the biological sensing element does not respond at all to alcohols. In case 3 chemical sensing element and biological sensing element still respond with 10 response units per 1 concentration unit of thiol, but the chemical sensing element responds in presence of thiols differently to alcohols, such that only 2 responds units are recordable per 1 concentration unit of alcohol.

It would be difficult to discriminate between the three cases with just the chemical sensing element by itself since the final sensor signal would be identical in all three experiments.

Assuming, there would be another chemical sensing element with a different response pattern to alcohols and thiols. Then discrimination would in principle be possible. However, a mathematical relation would be required for each sensing element that relates alcohol and thiol concentrations to the sensor response. Since alcohols affect the response strength to thiols, the expected relation will be more complex than the simple addition of the two independent responses.

However, the thiol compound can also be determined independently by a biological sensing element that is specific for thiol compounds. The contribution of thiols to the response of the chemical sensing element can be derived from that information. The remaining response must be caused by alcohols. And suddenly, by using sensor elements in accordance with the present invention it is getting much easier to calculate the alcohol concentration. It is just necessary to calibrate the chemical sensing element to alcohol compounds in presence of different thiol background concentrations. Since thiol concentration is known from the response of the biological sensing element, the best calibration curve can be chosen.

B) One sensing element changes the nature/concentration of the analyte and the changes are detected by another sensing element. The examples described below comprise three sensing elements, two of them of the same type. Still, the patent is not limited to three sensing elements, and not limited to such cases where both sensing elements of the same type are identical.

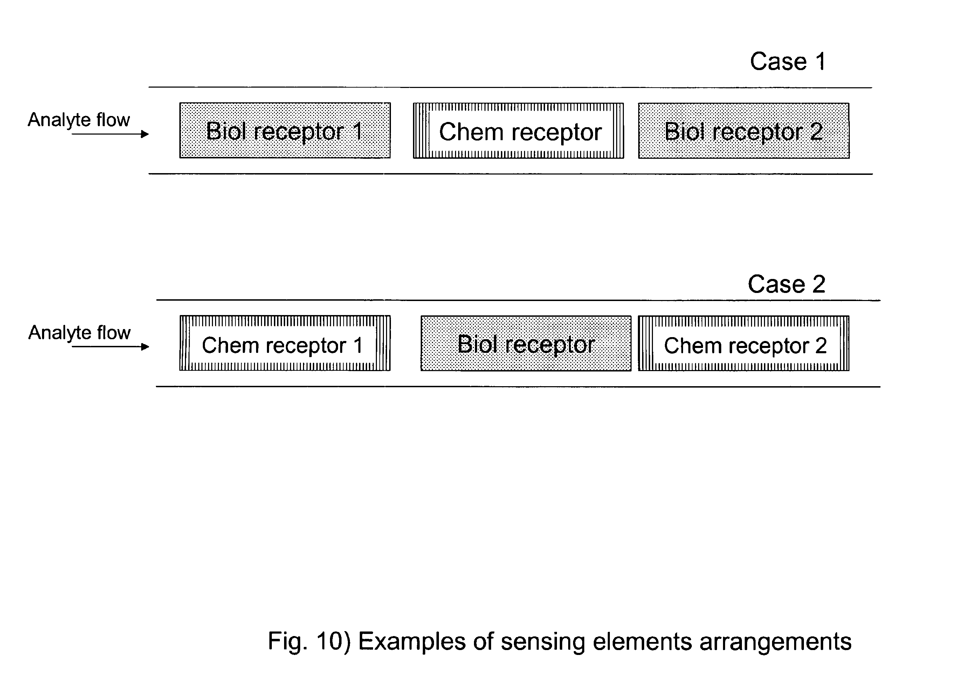

Case 1 (Fig. 10): The chemical receptor material modifies the nature/concentration of the analyte, and the changes are detected by the biological sensing element 2. By comparing the signals of both biological sensing elements, some additional information on the analyte is gained.

Example of case 1: the sample comprises two analytes H₂S and CH₃OH, and the chemical sensing element is based on gold nanoparticles, which irreversibly bind H₂S but not CH₃OH. If the biological sensing elements is sensitive to both H₂S and CH₃OH, the first biological sensing element will measure both, whereas the second biological sensing element will only be exposed to CH₃OH. In addition to removing the analyte, the chemical sensing element also gives some information on how much has been removed.

Case 2 (Fig. 10): the biological receptor material modifies the nature/concentration of the analyte, and the changes are detected by the chemical sensing element 2. By comparing the signals of both chemical sensing elements, some additional information on the analyte is gained.

Example 1 of case 2: the sample comprises two analytes NH₃ and H₂N-C₅H₁₀-NH₂. The biological sensing element binds selectively NH₃ but the signal may be too low to be detected. The chemical sensing elements on their own are sensitive enough to see the changes in amine concentration (by comparing the signals of both sensing elements), but could not differentiate between NH₃ and H₂N-C₅H₁₀-NH₂. In this case, the biological sensing element acts as a highly selective filter.

Example 2 of case 2: the analyte is H₂O₂ in an air sample. A first electrochemical cell (chemical sensing element) measures the O₂ from the air, the biological sensing element converts H₂O₂ to O₂ and H₂O, and a second electrochemical cell measures the O₂ both from the air and the one produced by the biological sensing element. The biological sensing element on its own may not produce a significant signal to quantify the H₂O₂, and therefore such a geometry is required. Twice the information on the amount of H₂O₂ may also be of interest to compensate for drift.

The features of the present invention disclosed in the specification, the claims and/or in the accompanying drawings, may, both separately, and in any combination thereof, be material for realising the invention in various forms thereof.

## Claims

1. A sensor for detecting an analyte comprising:
a first sensing element comprising a chemical receptor material,
and a second sensing element comprising a biological receptor material,
wherein an interaction of said analyte with said chemical or biological receptor material leads to a change in an intrinsic property of or associated with said chemical and biological receptor material, respectively,
said sensor further comprising at least one transducer converting said change in said intrinsic property into a signal.

2. The sensor according to claim 1, wherein said chemical receptor material is selected from the group comprising organic dyes, inorganic dyes, organic fluorophores, inorganic fluorophores, metal oxides, electrically conducting polymers, electrically non-conducting polymers, light emitting polymers, metals, semiconductors, metal nanoparticles, semiconducting nanoparticles, electrically conducting or semiconducting materials modified with organic or inorganic molecules, electrically conducting nanofibres, semiconducting nanofibers, carbon nanotubes, quantum-dots, and any combination of the foregoing materials.

3. The sensor according to any of claims 1-2, wherein said chemical receptor material is not a polypeptide, protein, nucleic acid, DNA, RNA, a tissue(s), a cell(s), or an organism(s).

4. The sensor according to any of claims 1-3, wherein said biological receptor material is selected from the group comprising polypeptides, proteins, in particular enzymes, receptor proteins, antibodies, membrane proteins in natural or synthetic lipid bilayers, nucleic acids, in particular DNA and RNA, such as aptamers, ribozymes, aptazymes, tissue(s), cell(s), organism(s), and any combination of the foregoing materials.

5. The sensor according to any of claims 1-4, wherein said intrinsic property of or associated with said chemical or biological receptor material is selected from the group comprising physical properties such as electrical conductivity, resistivity, current, potential, capacity, redox state, color, light absorbance, light transmittance, reflectivity, refractive index, fluorescence, phosphorescence, luminescence, viscosity, mass as determined by gravimetry or by mass sensitive resonance techniques like surface accustic wave resonance or quartz crystal microbalance, heat as determined by calorimetry, conformation, physiological activity, and chemical properties, such as molecular composition, binding states, or reactivity.

6. The sensor according to any of the foregoing claims, wherein said chemical receptor material is present in said first sensing element, and said biological receptor material is present in said second sensing element, respectively, in the form of a layer, spots or a plurality of spots.

7. The sensor according to any of the foregoing claims, wherein there is one transducer per sensing element such that there is a first and second transducer associated with said first and second sensing element, respectively.

8. The sensor according to claim 7, wherein an interaction of said analyte with said chemical receptor material leads to a change in an intrinsic property of or associated with said chemical receptor material, and wherein said first transducer converts said change in said intrinsic property of or associated with said chemical receptor material into a first signal, and wherein an interaction of said analyte with said biological receptor material leads to a change in an intrinsic property of or associated with said biological receptor material, and wherein said second transducer converts said change in said intrinsic property of or associated with said second biological receptor material into a second signal.

9. The sensor according to claim 8, wherein said first signal and/or said second signal is indicative of the presence and/or the amount of an analyte.

10. The sensor according to any of claims 8-9, wherein said first signal and said second signal are individually further processed or are combined and further processed, wherein further processing includes mathematical operations, such as averaging, adding or subtracting, performing a pattern recognition algorithm, use of said first signal as a qualitative measure for said analyte and use of said second signal as a quantitative measure for said analyte, and vice versa, use of said first or said second signal or the combined signal thereof for adjusting and calibrating data recording of further sensing elements, use of said first signal or said second signal or the combination thereof for baseline drift compensation, and use of said first signal and said second signal to cover different concentration ranges thereby covering a broader concentration range.

11. The sensor according to any of claims 7-10, wherein said intrinsic properties of or associated with said chemical and biological receptor material, respectively, are the same or different.

12. The sensor according to any of claims 1-7, wherein an interaction of said analyte with said chemical and said biological receptor material leads to a change in an intrinsic property of or associated with said chemical andbiological receptor material, respectively, and wherein said intrinsic property of or associated with said chemical and biological receptor material, respectively, is the same, and wherein there is a first and a second transducer associated with said chemical and said biological receptor material respectively, both of which convert said change in said intrinsic property into a combined signal.

13. The sensor according to any of claims 1-6, wherein an interaction of said analyte with said chemical and biological receptor material leads to a change in an intrinsic property of or associated with said chemical and biological receptor material, respectively, and wherein said intrinsic property of or associated with said chemical and biological receptor material, respectively, is the same, and wherein there is only one common transducer for both said chemical and biological receptor material, wherein said common transducer converts said change in said intrinsic property into a common signal.

14. The sensor according to claim 13, wherein said chemical receptor material and said biological receptor material are arranged in a layer each, either next to each other or on top of each other, and at least one of said layers is in contact with said transducer, wherein, if said layers are on top of each other, the upper layer covers the lower layer completely or at least partially.

15. The sensor according to any of claims 1-7, wherein there is a first transducer and a second transducer associated with said chemical receptor material and said biological receptor material, respectively, and wherein an interaction of said analyte with said chemical receptor material leads to a change in an intrinsic property of or associated with said chemical receptor material, and wherein said transducer associated with said chemical receptor material converts said change in said intrinsic property of said chemical receptor material into an signal which interacts with the biological receptor material which interaction, in turn, leads to a change in an intrinsic property of or associated with said biological receptor material, and wherein said transducer associated with said biological receptor material converts said change in said intrinsic property of said biological receptor material into an signal, and vice versa.

16. The sensor according to any of the foregoing claims, wherein said analyte is a gaseous analyte, a liquid analyte or a solid analyte.

17. The sensor according to any of the foregoing claims, wherein said analyte is comprised in a sample, and wherein said first sensing element and said second sensing element are arranged such that said sample, upon exposure of the sensor to said sample, is first passing said first sensing element and subsequently said second sensing element, or vice versa, or said sample passes said first sensing element and said second sensing element simultaneously.

18. The sensor according to any of claims 1-16, wherein said analyte is comprised in a sample, and wherein said first and second sensing elements are arranged in such a manner that, upon exposure of said sensor to said sample, a first portion of said sample passes by said first sensing element and a second portion of said sample passes by said second sensing element.

19. The sensor according to any of claims 1-11, 16-18, comprising a third sensing element and, optionally, further sensing elements, wherein said third and said further sensing elements are, independently at each occurrence, as defined in any of claims 1-11, 16-18.

20. The sensor according to any of claims 1-11, 16-19, comprising a plurality of sensing elements which are, independently at each occurrence, as defined in any of claims 1-11, 16-19.

21. The sensor according to any of claims 19-20, comprising at least a first, second and third sensing element, said sensing elements being associated with a first, second and third transducer, respectively.

22. The sensor according to claim 21, wherein said first, second and third sensing elements are serially arranged such that at least two sensing elements are behind one another so that a sample comprising an analyte, upon exposure of said sensor to said sample, first passes one and then the other of said at least two sensing elements.

23. The sensor according to claim 22, wherein said first, second and third sensing elements are serially arranged such that said first, second and third sensing element are behind one another so that a sample comprising an analyte, upon exposure of said sensor to said sample, passes said first, second and third sensing elements one after the other.

24. The sensor according to claim 23, wherein said first and third sensing elements are of the same type and said second sensing element is of a different type, and wherein said first, second and third sensing elements are serially arranged such that said first, second and third sensing element are behind one another so that a sample comprising an analyte, upon exposure of said sensor to said sample, passes said first, second and third sensing elements in the order first, second and third sensing element, or third, second and first sensing element.

25. The sensor according to any of claims 21-24, wherein two out of said first, second and third sensing elements comprise a chemical receptor material and the other sensing element comprises a biological receptor material, or wherein two out of said first, second and third sensing elements comprise a biological receptor material, and the other sensing element comprises a chemical receptor material.

26. A sensor array comprising a plurality of sensors as defined in any of the foregoing claims.

27. A method of detecting an analyte, comprising:
- exposing a sensor according to any of claims 1-25 or a sensor array according to claim 26 to a sample comprising an analyte, and
- detecting a signal, wherein the signal is indicative of the presence and/or amount of said analyte within said sample.

28. The method according to claim 27 comprising:
- exposing a sensor according to any of claims 24-25 to a sample comprising an analyte,
- detecting in any order a signal from said first and said third transducer, and
- comparing said two signals, wherein a difference between the two signals is indicative of the presence and/or amount of said analyte within said sample.

29. The method according to claim 28, wherein said sample is a body sample, such as blood, urine, plasma, cerebrospinal fluid, pus, saliva, breath, feces, or solid exhaust, a food sample, an environmental sample, such as air, water or soil from the environment.

30. Use of a method according to any of claims 28-29 for medical diagnosis, healthcare diagnosis, food analysis, agricultural testing, detection of harmful chemicals, toxins or explosives, or for environmental detection of pollutants.
